# EUROPEAN PATENT APPLICATION

(11) **EP 3 217 639 A1**
(43) Date of publication of application: **13.09.2017**
(21) Application number: 14835702.3
(22) Date of filing: 23.12.2014
(51) Int. Cl.: H04M 3/51, H04M 7/00

(54) **SYSTEM AND METHOD FOR INFORMATION TRANSMISSION**

(71) Applicant: Datapoint Europe Holding, S.L., 28034 Madrid (ES)
(72) Inventor: ZAMORANO PRIEGO, José Luis, E-28034 Madrid (ES); AMAT AROCAS, Enrique, E-28034 Madrid (ES)
(74) Representative: González López-Menchero, Álvaro Luis
(86) International application number: PCT/ES2014/070966
(87) International publication number: WO 2016/102717

(57) **Abstract**

The present invention relates to a system and method of transmitting information, where said system comprises a call center made up of agent posts connected to the Internet, which are accessible from a telephone switchboard connected to the switched telephone network and can be connected from a smartphone with a connection to the telephone network and the Internet, and where the system additionally comprises a central system (I) or set of servers connected to the Internet where there is hosted a web application which allows transmitting information between the smartphone (B) and the agent post or posts (E) without interrupting the communication, where in said central system there is additionally a registration system (L), a dispatcher (P) and a series of channel services (Q). The system allows transmitting information over one and the same already established voice connection, being able to send additional data without needing to interrupt the connection, in addition to the possibility of transferring the communication to another agent, of a later or differed interaction and of system scalability.

## Description

### OBJECT OF THE INVENTION

As indicated by the title of the invention, the object of the present invention is a system and a method of transmitting information, specifically a system which allows a person or client using a smartphone-type telephone with access to the public telephone network and to the Internet data network to establish communication with another person or commercial agent in which it is possible during an established voice conversation to exchange information in both directions, where in addition to voice, it is possible to exchange information such as positions, images, photographs taken by the user, or any information captured by the sensors which the smartphone may be provided with.

Furthermore, it is possible for an administrator user to configure the channels visually, without needing to program the source code of the channels, it also being possible for users to program user interfaces or personalize channels.

The present invention is characterized by the elements forming part of the system, the functionalities that are characteristic of each of them and the interoperability between same such that a system of transmitting information based on an established voice call is achieved without interrupting said call, improving the efficiency and management of the process of transmitting information, where the system allows being adapted to any type of technology used in contact centers.

Therefore, the present invention is comprised in this field of techniques for communicating and transmitting data and information between a client and an agent of a contact center.

### PRIOR ART

Call centers or contact centers are increasingly more common today. They are designed to help consumers of certain enterprises and also to supply information in general.

Contact centers have always had the primary means of communication with its users in telephone activity. They started using only this means, but with the development of Internet and the emergence of new means for communicating (for example, e-mail), both users and contact centers came to adopt new forms of communication. However, the telephone still continues to be used for the majority of communication, distantly followed primarily by e-mail and web chat.

The tendency to use social networks has also come about in recent years, although for now it is not an activity that is managed in contact centers but rather in marketing departments because the usefulness thereof is more closely related to maintaining the online reputation or providing massive advertising to followers of the enterprise on Facebook, Twitter, etc.

The introduction of all these channels provided a greater diversity of options, each with its advantages and drawbacks.

E-mail offers a fundamental advantage: the possibility to exchange information in other formats: documents, images, links to web pages, etc., which was not possible over the telephone. However, communication is not in real time.

In turn, web chat allowed free communication in real time, although as a drawback, the conversation was less fluid than a voice conversation, and furthermore it was not possible if the user was not browsing on the corporate web site.

Voice over IP (VoIP) over the Internet (Skype type) is also used as a free voice channel, although it has the problem of quality with the audio because it is transmitted over public networks that do not have quality of service (QoS). Furthermore, it is also generally initiated from the enterprise web site.

Another way to establish contact consists of asking the contact center to call a telephone provided by the client using the standard telephone network. This again means that the client is browsing on the enterprise web site and from there asks to be called.

For contact centers the emergence of multichanneling involved the emergence of new challenges in managing contact with users primarily because communication channels are independent and managed by different applications and systems. For example:
- Telephone: a telephone exchange distributing calls among agents which are connected to it by means of an internal telephone extension.
- E-mail: a corporate mail server manages several accounts (info@enterprise.com, claims@acme.com, etc.). Agents do not have their own accounts but rather receive mails through an application connected to the corporate server.
- Web Chat: a chat server manages sessions similarly to how the telephone exchange manages calls, distributing them among agents that are connected to the server by means of an internal chat "extension".

Since the telephone exchange and web chat were isolated systems, an agent could receive contact through a system, for example a chat session, while handling a call. To avoid this problem, increasingly more sophisticated solutions came about which were initially called CTI solutions and are generally known today as multichannel solutions.

Another problem that arises when performing multichannel processes (for example: a user contacts an agent by telephone, the agent then sends the user an e-mail, and finally the user responds with another e-mail) is assuring that the agent is the same agent throughout the entire process.

Current CTI solutions together with Workflow applications allow solving this problem, however they involve a complexity involving costly maintenance and an enormous investment in terms of implementation services and equipment.

In parallel to the development of communication channels, mobile terminals or devices have also been subject to development in recent years. Said terminals or devices have gone from being a mere mobile telephone to becoming a photographic and video camera, a GPS navigator, and a mobile point of access to the Internet.

Figures on mobile telephony penetration are astonishing both in terms of the amount and the spiraling rate of growth thereof. Mobile telephones are used increasingly more for an increasingly larger number of reasons. Naturally, it is the telephone communication device preferred by users compared to a land line telephone because:
- the mobile telephone number is not shared with anyone (compared to a land line number for a home or enterprise)
- the mobile terminal can be carried around at all times, and therefore it can make or receive a call at all times.

This has obviously had an impact on the manner in which contact centers communicate with users, the mobile telephone number becoming the primary means of contact.

However, despite the fact that users and contact centers prefer the mobile telephone and the fact that the mobile device has many functions in addition to their call function, there currently is no solution for a contact center that allows making the most of the advantages of the sophistication of mobile terminals.

To better understand the possibilities this functionality would entail, some of the cases of use thereof are illustrated.

**Emergencies.** A person can be witness to an accident and call 112 to report it. During the conversation, the 112 agent can ask the user to send GPS location from the user's telephone. The agent can also request a photograph to evaluate the magnitude or severity of the accident.

**Collections.** A very high percentage of payment delinquency is due to small unpaid debts due to confusion, forgetting to pay or minor issues that usually end up being solved by means of paying the debt. Collection agencies have specialist agents who contact debtors and manage the problem. This usually requires sending additional information after finishing the call, for example the receipt due, and performing subsequent follow-up, generally with at least one new contact, until payment is made.

This process could be reduced to a single call if, during said call, the agent could send the receipt to the user and the user could make payment, which would be absolutely feasible with the system herein designed.

**Online shopping.** When a client makes a purchase over the Internet, for example a TV, and this product is out of stock, an agent from the call center contacts the client to inform them and offer alternatives. Explaining the characteristics and aspect of the different alternatives that are offered is difficult to do over a call. The client generally decides to look at the shop web page again to check and go over the information provided by the agent. This results in the loss of many clients who finally choose to look in another shop, or they clients "cool off" and decide not to go ahead with the purchase.

If information, such as the product data sheet with a photograph and the main product characteristics, could be sent to the client communication would be much more effective and in many cases the operation could be closed during the same call.

**Roadside assistance.** In the event of a breakdown, when the insurance company is called to request roadside assistance, users can send their GPS position during the same call so that they can be accurately positioned, such that the assistance service can be more effective in locating them.

**Claims adjustment.** When users call an insurance company to communicate an accident (in the home, an automobile accident, etc.), they must generally send a claims adjuster to evaluate damages. This could often times be prevented, thereby reducing costs for the insurance company and streamlining service for clients, if users could send a photograph to the call center agent they have contacted.

**Payments.** Making payments using a credit card involves providing all the card data to an agent during a conversation with said agent, which is somewhat rejected among some consumers. In addition, making payments with Paypal or the like, which is common over the Internet, is not possible over the telephone. These transactions could be made from the mobile terminal without having to give any data to the agent by means of Superchannel, and said agent would only be notified that payment has been made successfully.

The manner in which the sector has approached the exchange of information in different formats up until now has been by means of multichanneling. In other words, different channels are used to exchange different formats.

As previously discussed, the exchange of information over different channels raises different problems according to the case:
1) the information exchanged over the different channels must be synchronized so that it is filed under the same user;
2) sometimes the different channels must also be synchronized so that the agent handling the operation is the same agent throughout the entire process;
3) the process is prolonged due to having to go through several steps: calling, sending information, calling again, etc.;
4) some information formats, such as GPS position, need to be sent immediately; it makes no sense to send it by e-mail and wait for the department or backoffice to process it later;
5) it would be preferable to handle some information, for example a payment, confidentially and not have to give credit card data to an agent.

Current multichanneling solutions known up until now for a contact center offer a solution to the first two challenges, but they provide no way of solving the other problems mentioned.

To solve this drawback today, it is necessary to use specific technology which does not belong to the sector of contact centers and which is only applicable to the specific case. For example, imagine a call center of a transportation enterprise that attends to the drivers of the thousands of vehicles it has traveling throughout Europe. Drivers call the international service number with the mobile where an agent attends to them. To know their location, the truck is equipped with a GPS positioning system which continuously transmits its position to the call center. The agent knows where the vehicle is and can contact roadside assistance in the country at issue and send help to that location.

This is one way to solve the problem which is not applicable to other circumstances. For example, if this case were applied to an automobile insurance company and to drivers calling to request roadside assistance, the technological solution used by the transportation enterprise is not applicable.

Current multichanneling solutions obviously provide high-value functionalities for contact centers. The primary functionalities include:
- efficient management of the contact channels, dispatching interactions (calls, e-mails, chats...) according to configurable priorities;
- synchronization of channels to provide a unified vision of each user;
- integration of these contact channels in agent desktop applications;
- statistics and reports of all the agent and user activity.

However, despite all the advantages provided by the multichannel solutions known in the state of the art, these known solutions can be improved, allowing sending additional information over the same voice call without interrupting the call, where synchronization with other contact channels can be done with the same multichanneling application that the contact center is using.

Patent document US2011305328 A1 describes a system comprising a web page server connected to the Internet for access from a remote computer by the user, said web page server being associated with a main server connected to the Internet with at least a management-storage database and at least automatic means for telephone connection to a number of call centers, these call centres being provided with at least one telephone terminal, a computer connected to a global network and a webcam, for establishing contact between an agent and the user through a videoconferencing server. This type of communication allows the user to establish immediate contact with a commercial agent in the same way as in a personal interview in an office or somewhere else, without having to leave home, which assures optimal quality of the communication for maintaining a conversation and flow of data of reduced bandwidth requirements between said user and the agent.

However, on many occasions it is not necessary to establish a videoconference, but rather to be able to transmit additional data relating to the established communication, data such as positions, images, photographs. This could be done by interrupting communication and later sending said data, to then take up the conversation again.

Therefore, an object of the present invention is to develop a system of transmitting information which allows being able to send additional data, such as positions or photographs, over one and the same already established voice connection without needing to interrupt the connection, in addition to being securely sent, which results in an improvement in the effectiveness and productivity of the established communication.

### DISCLOSURE OF THE INVENTION

An object of the present invention is a system and method of transmitting information, specifically a system which allows a person or client using a smartphone-type telephone with access to the public telephone network and to the Internet data network to establish communication with another person or commercial agent, in which it is possible to transmit data, such as positions, images or photographs taken by the user and can be viewed by the second person or commercial agent, in addition to voice.

The system of transmitting information comprises the public switched telephone network (PSTN) or another type of technologies, and an Internet network or other type of public or private networks that can be accessed by smartphones which have web page browsers such as Chrome, Firefox, Explorer, Opera or Safari.

The smartphone has a web page browser and some of the following functionalities or combinations thereof, which are listed with an illustrative and non-limiting character.
- Telephone: serves to receive and make voice calls.
- Camera: captures images or video.
- Microphone: captures sound.
- Speaker: emits sound, generally serves to emit voice, dialogues or music.
- Touch screen: screen which interprets the strokes of the user's fingers.
- Operating system: software managing the hardware resources and software applications installed in the smartphone.
- Web browser: software which allows interacting with web pages.
- GPS: sensor which determines the geographical position of the smartphone based on signals received by satellites.
- Memory: component which allows storing computer data, such as files, for example.
- Vibrator: component of the smartphone that makes the terminal vibrate for notifying the user of an event.
- Accelerometer: component of the smartphone which allows identifying the vertical or horizontal position of the terminal.
- NFC: component of the smartphone which allows wirelessly communicating with other devices by means of NFC technology.
- Fingerprint reader: captures fingerprints
- Pulsimeter: captures heart beats.

The functionalities or sensors set forth do not have a limiting character, and the system can be valid for other sensors or functionalities that can be incorporated in a smartphone in the future.

Alternatively, instead of only one smartphone, the client can have a telephone without a smartphone function and use it in a combined manner with a PC, tablet, PDA, smartphone or the like.

The public telephone network offers different types of mobile access referred to on the market according to their generation, e.g., 2G, 3G, 4G. The invention contemplates the possibility of any present and future accesses to the public telephone network.

The system also comprises an automatic call dispatcher or telephone switchboard, which is a device that dispatches the calls reaching the customer service systems and telephone operators based on decision rules. Said automatic call dispatchers act as a gateway such that it allows connecting the public switched telephone network (PSTN) with the telephones of the call center, which are usually IP-type.

A call center is made up of at least one agent post, each agent post being provided with a telephone and a PC of the agent. The telephone of each post usually employs voice over IP technology and is connected to the automatic call dispatcher. Interactions with users are carried out in the PC of each agent post and it is connected to the Internet network.

The Internet network will be accessible from different means of access, such as ADSL, fiber optic, or from data networks of 2G, 3G and 4G smartphones.

The system has a central system or set of servers where there are hosted different elements for making an application work for transmitting additional information which will have to be connected to the Internet and could be virtual or physical. The set of servers of the central system communicate with one another by means of private networks or the public Internet network.

The central system comprises:
- Programming interfaces (APIs) and databases
- Front ends or web user interfaces using the programming interfaces for interacting with the system using HTML, CSS3 and JavaScript technology. There are five types of users and therefore of interfaces: client, agent, supervisor, administrator and super administrator. In addition to their particular functions, user interfaces have transverse functions shared among different users:
   ▪ Reporting: shows statistical information about occurring interactions in the form of tables or graphs.
   ▪ Channel constructor: allows constructing channels based on sensors, direction of communication and literals.
   ▪ Configuration: allows making changes in configuration and administration of the solution.

In a possible embodiment, the front end can be the actual call center.

The system object of the invention further comprises a registration system made up of different elements interconnected by means of private networks or the public Internet network. The purpose of the system is to allow the client and the agent to register to enable exchanging information over the different channels, and which is also interconnected to the central system by means of private or public networks.

The registration system comprises:
- A random key generator generating a secret key enabling the exchange of information between agent and client once it is shared between both parties.
- A security manager responsible for controlling access to and secure sending of interactions. The security manager performs the following actions.
   - Encoding and/or shortening secret keys. A shortened secret key is particularly useful for cases in which the key is transferred by means of SMS given that the number of characters is very limited.
   - Protecting communication in the event of a malicious attacker attempting to enter the communication over the course of the conversation. The key encoder stores the IP and other characteristics of the client device attempting to access information. If another device attempts to access after that, entrance thereof will be blocked. This functionality can be deactivated if the call center wants a client to be able to access the system after the course of the first conversation.
   - Verifying that the mobile terminal of the client has the characteristics suitable for using the channel. If it is detected that it does not comply with one of the characteristics, agent and client are informed. For example, Internet access speed could be low or the operating system used may not be supported.
- A key communicator responsible for transferring the encoded secret key to the agent and to the client. There are different ways of doing this. Preferably, the agent will receive the key through the agent user interface. In addition, the client can receive the secret key in different ways, such as, for example, the following:
   - SMS.
   - E-mail.
   - The agent communicates it verbally over the telephone call.
   - DTMF tones
   - Using software previously installed in the smartphone

The system also has a dispatcher re-routing interactions generated by the agent to the client that has been registered with the same secret key. It also re-routes the interactions generated by the client to the agent in a similar manner.

The system has a series of services resulting from being combined with sensors or functionalities of the smartphone configuring the multiple channels of the system. Some possible services are:
- Maps: shows the map of a zone based on search coordinates or parameters.
- Payment gateway: allows making payments by means of credit card or other electronic payment methods.
- CRM: system for managing data pertaining to specific clients of a business.
- Health interpreter: interprets the transferred health data.
- Positioning service: system which allows determining geographical position based on the points of access to the mobile or Wifi network that are in a zone.
- Electronic certificate interpreter: checks the veracity of an electronic certificate.
- ERP (enterprise resource planning): system for managing internal processes of a business.
- OCR (optical character recognition): optically recognizes texts or characters based on images.
- QR (Quick Response) interpreter: identifies images or information encoded in QR.
- Barcode interpreter: identifies images or information encoded in barcodes.
- Public emergency service: systems where information about cases relating to public emergencies is registered
- Memory: allows storing computer data, such as files, for example.
- File reader: reads or interprets different types of files such as, for example, text documents, pdfs or spreadsheets.
- NFC interpreter: identifies information transferred by means of NFC technology.

The list of services set forth for the system object of the invention is non-limiting and any other future applicable service may be added.

The system can also comprise:
- A supervisor preferably connected to the central system by means of a PC and viewing occurring interactions or sessions in real time or in the log.
- An administrator preferably connected to the central system by means of a PC and making configuration changes in objects relating to the account of the contact center.
- A super administrator preferably using a PC to connect to the central system and making configuration changes affecting the entire platform of the system object of the invention and/or particular accounts.

Although the supervisor, administrator and super administrator are preferably connected by means of a PC, they can also be connected by means of a smartphone, tablet, PDA or the like.

The method of transmitting information with the system described above comprises the steps of:
- A super administrator using a PC or equivalent being connected to the central system and configuring a contact center, an administrator user and other data relating to the contact center that will use the system object of the invention. This process can be replaced with an automatic process in which an anonymous user requests being registered in the system of a contact center and administrator user.
   - An administrator being connected to the central system by means of Internet and configuring agent users, supervisor users of the systems and the channels available and other configuration parameters. The channels are constructed based on the following parameters:
      ∘ Sensor of the smartphone used.
      ∘ Name of the channel which the client will see.
      ∘ Name of the channel which the agent will see.
      ∘ Direction of communication (client to agent or agent to client).
      ∘ Channel service (Q) used.
- Establishing a telephone connection or call between a smartphone and a post of the contact center or vice versa which, in the case of being established between the smartphone and the post of the contact center, involves the following actions:
   o The smartphone making a call to the public switched telephone network (PSTN)
   o Handing over the call from the public switched telephone network (PSTN) or the like to a call dispatcher or telephone switchboard
   o Handing over the call from the automatic call dispatcher to the telephone of a post of the call center.
- Registering from the PC of the agent post of the call or contact center to the smartphone and comprising the steps of:
   ∘ Requesting registration from the PC of the agent post of the call center to the programming interfaces by means of the front end or another type of external front end
   ∘ The programming interface and the registration system communicating for the purpose of performing registration.
   ∘ The registration system performing the following actions:
      - Generating a secret key with the key generator.
      - Encoding and shortening the secret key by means of the security manager.
      - The key communicator transferring the information to the client. A possible embodiment would be to use an SMS gateway sending an SMS to the client with a URL representing the short-form encoded private key.

The key communicator is not limited to sending an SMS, being able to use the techniques of:
▪ Sending an e-mail
▪ Transmitting DTMF tones
▪ Transmitting codes over the voice channel
▪ Transmitting a secret key using software previously installed in the smartphone.
   ∘ Handing over the key to the smartphone (B) through the public telephone network.
   ∘ Accessing the URL of the SMS received from the smartphone. The browser accessing the short URL by means of the Internet network opens automatically.
   ∘ The security manager decoding the secret key represented in the URL, storing the IP of the mobile telephone or other characteristics of the device and re-routing the browser of the smartphone to the central system.
      - The smartphone accessing the central system to start using the invention.
      - Using one of the sensors of the smartphone
      - Transferring the values captured by any of the sensors of the smartphone over the Internet to the central system.
         The central system can optionally use a service which offers support to channels for interpreting the captured information
      - The central system asking the dispatcher for the destination of the captured interaction.
      - The dispatcher in turn querying the security manager (N) about the destination of the generated interaction and verifying that the IP or other parameters of the client are those previously registered, thereby preventing malicious attacks.
      - Showing the information captured and synthesized by the channel in the agent PC (G) if the security manager approves it.

As previously stated, agent to client interaction is also possible, in which case the steps are:
- The agent using the PC to ask to the central system to send information
- The central system constructing information about the channel based on the support services offered to the channel.
- The central system asking the dispatcher for the destination of the information generated
- The dispatcher in turn querying the security manager about the destination of the information generated.
- Information about the channel being transmitted to the smartphone over the Internet network
- The smartphone showing information about the channel either on screen or by interpreting said information by means of one of the sensors and/or support systems provided for the channels.

Over the course of a conversation in which the system of the invention is used, the agent can transfer the call to another agent by means of the usual mechanisms, while at the same time asking the central system, the latter asking the dispatcher and the latter asking the security manager to register the new agent so that said new agent can continue with the conversation, as well as see all the information exchanged up to that point and use the channels if necessary.

There is a possibility of a client user remaining registered in the system until a certain time has lapsed, for example several hours, for the purpose being able to later send requested information, for example, when a photograph is requested and the user cannot send it at that time. This later request for interaction is sent from the agent to the central system, from the latter to the dispatcher and from the latter to the security manager.

Once the client has been able to capture the requested information, e.g., a photograph, the client sends it over the Internet to the central system, the latter communicates it to the dispatcher, and the latter communicates it to the security manager, determining whether or not the information must be stored.

The central system can also inform the agent about interactions pending action to be taken by the agent, being able to verify whether or not the required information has been sent.

All the servers are capable of increasing or reducing their characteristics automatically according to the load they are handling at all times. This can be done using two possible ways or a combination thereof:
- Vertical scalability: The equipment automatically increase RAM, CPU and hard drive.
- Horizontal scalability: The equipment is automatically replicated, such that the clients of such equipment are connected to two or more pieces of equipment instead of just one, thereby increasing total capacity.

This allows the invention to be valid, regardless of the number of users connected to same.

This type of architecture has high-availability and/or redundancy characteristics. This means that in the event of a failure or non-availability of one of the elements of the invention, there will be others that are capable of taking on such tasks such that the users do not notice failures.

The system is not limited to this embodiment but rather there are other possible languages and architectures.

The described system of transmitting information achieves an alternative, simple and inexpensive form of multichannel management without interrupting the call in a secure manner, where the client and agent are registered under one and the same secret key, where it is possible to make transfers between agents and configure the duration for which the client is registered in the system, in addition to reducing the periods for executing a process since the exchange of information that cannot be transmitted verbally (documents, images...) is done over the course of the actual telephone conversation.

This alone can add enormous value to contact centers because it allows a resolution in the first contact, increases success rates and reduces costs (a second or third call will not be needed to close the process).

Throughout the description and claims the word "comprise" and variants thereof does not seek to exclude other technical features, additions, components or steps. For the persons skilled in the art, other objects, advantages and features of the invention will be understood in part from the description and in part from practice of the invention.

### DESCRIPTION OF THE DRAWINGS

To complement the description that is being made and for the purpose aiding to better understand the features of the invention according to a preferred practical embodiment thereof, a set of drawings is attached as an integral part of said description in which the following is depicted with an illustrative and non-limiting character.
Figure 1 shows a schematic depiction of the system of transmitting information object of the invention.
Figure 2 shows a depiction of a possible architecture of the servers, programming interfaces, front ends and databases.

### PREFERRED EMBODIMENT OF THE INVENTION

A preferred embodiment of the proposed invention is described below in view of the drawings.

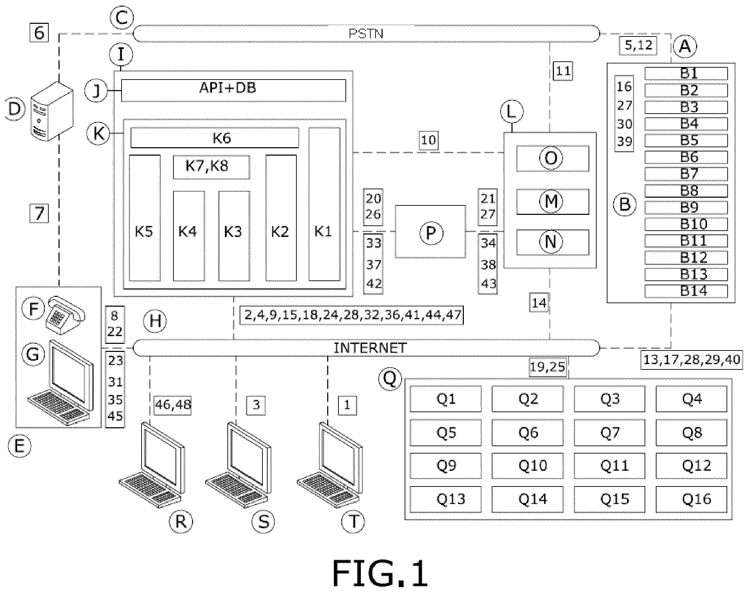

Figure 1 shows that the system comprises at least one client (A) provided with a smartphone (B) that can be connected to the public switched telephone network (PSTN) (C) to which there is connected a call dispatcher (D) or telephone switchboard, which is in turn connected to one or several agents (E), each agent post (E) comprising a telephone (F) and a personal computer PC (G), and they are connected to the Internet (H).

The system comprises a central system (I) or set of servers connected to the Internet where there is hosted a web application which allows transmitting information between a smartphone and the agent posts, where said central system in turn comprises:
- A set (J) of programming interfaces (APIs) and databases
- Front ends or web user interfaces (K) using the programming interfaces for interacting with the system using HTML, CSS3 and JavaScript technology. There are five types of users and therefore of interfaces: client (K1), agent (K2), supervisor (K3), administrator (K4) and super administrator (K5). In addition to their particular functions, they also have shared functions of: reporting (k6), configuration (k7) and channel constructor (k8)

The system comprises a registration system (L) made up of different elements interconnected by means of private networks or the public Internet network. The purpose of the system is to allow the client and the agent to register to enable exchanging information over the different channels, and which is also interconnected to the central system by means of private or public networks.

The registration system (L) comprises:
- A random key generator (M) generating a secret key enabling the exchange of information between agent and client once it is shared between both parties.
- A security manager (N) responsible for controlling access to and secure sending of interactions. The security manager performs the following actions.
   - Encoding and/or shortening secret keys.
   - Protecting communication in the event of a malicious attacker attempting to enter the communication over the course of the conversation. The key encoder stores the IP and other characteristics of the client device attempting to access information. If another device attempts to access after that, entrance thereof will be blocked. This functionality can be deactivated if the call center wants a client to be able to access the system after the course of the first conversation.
   - Verifying that the mobile terminal of the client has the characteristics suitable for using the channel.
- A key communicator (O) responsible for transferring the encoded secret key to the agent and to the client. There are different ways to do this. Preferably, the agent will receive the key through the agent user interface. In addition, the client can receive the secret key in different ways such as, for example, the following:
   - SMS.
   - E-mail.
   - The agent communicates it verbally over the telephone call.
   - DTMF tones
   - Using software previously installed in the smartphone

The system also has a dispatcher (P) re-routing interactions generated by the agent to the client that has been registered with the same secret key. It also re-routes the interactions generated by the client to the agent in a similar manner.

The system has a series of channel services (Q) resulting from being combined with the sensors or functionalities of the smartphone configuring the multiple channels of the system. Some possible services are:
- Maps (Q1): shows the map of a zone based on search coordinates or parameters.
- Payment gateway (Q2): allows making payments by means of credit card or other electronic payment methods.
- CRM (Q3): system for managing data pertaining to specific clients of a business.
- Health interpreter (Q4): interprets the transferred health data.
- Positioning service (Q5): system which allows determining geographical position based on the points of access to the mobile or Wifi network that are in a zone.
- Electronic certificate interpreter (Q6): checks the veracity of an electronic certificate.
- ERP (Enterprise Resource Planning) (Q7): system for managing internal processes of a business.
- Biometric database (Q8)
- OCR (Optical Character Recognition) (Q9): optically recognizes texts or characters based on images.
- QR (Quick Response) interpreter (Q10): identifies images or information encoded in QR.
- Barcode interpreter (Q11): identifies images or information encoded in barcodes.
- Public emergency service (Q12): systems where information about cases relating to public emergencies is registered
- Memory (Q13): allows storing computer data, such as files, for example.
- File reader (Q14): reads or interprets different types of files such as, for example, text documents, pdfs or spreadsheets.
- NFC interpreter (Q15): identifies information transferred by means of NFC technology.
- Other functionalities (Q16)

The system can also comprise:
- A supervisor (R) preferably connected to the central system by means of a PC and viewing occurring interactions or sessions in real time or in the log.
- An administrator (S) preferably connected to the central system by means of a PC and making configuration changes in objects relating to the account of the contact center.
- A super administrator (T) preferably using a PC to connect to the central system and making configuration changes affecting the entire platform of the invention and/or particular accounts.

Although the supervisor, administrator and super administrator are preferably connected by means of a PC, they can also be connected by means of a smartphone, tablet, PDA or the like.

The smartphone or smartphones (B) used in the system can have one or some of the services listed below:
- Telephone (B1): serves to receive and make voice calls.
- Camera (B2): captures images or video.
- Microphone (B3): captures sound.
- Speaker (B4): emits sound, generally serves to emit voice, dialogues or music.
- Touch screen (B5): screen which interprets the strokes of the user's fingers.
- Operating system (B6): software managing the hardware resources and software applications installed in the smartphone.
- Web browser (B7): software which allows interacting with web pages.
- GPS (B8): sensor which determines the geographical position of the smartphone based on signals received by satellites.
- Memory (B9): component which allows storing computer data, such as files, for example.
- Vibrator (B10): component of the smartphone that makes the terminal vibrate for notifying the user of an event.
- Accelerometer (B11): component of the smartphone which allows identifying the vertical or horizontal position of the terminal.
- NFC (B12): component of the smartphone which allows wirelessly communicating with other devices by means of NFC technology.
- Fingerprint reader (B13): captures fingerprints
- Pulsimeter (B14): captures heart beats.

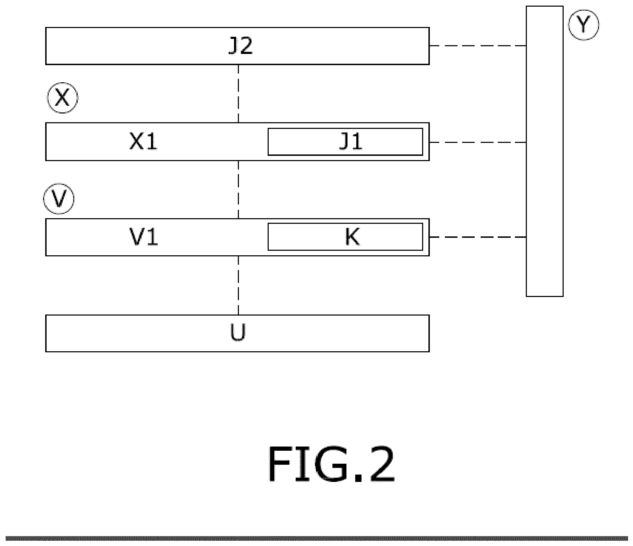

Figure 2 shows a depiction of a possible architecture of the servers, programming interfaces, front ends and databases.

One or several servers (V) can contain one or several first web application servers (V1) in turn containing the front ends (K) of the different web users. The front ends (K) interact with users by means of HTML5, Javascript and CSS3. The language used on the server side is PHP.

One or several servers (X) containing one or several web application servers (X1) in turn containing the programming interfaces (APIs) (J1) which interact with the database and other back end processes that may exist. The communication protocol for access to the programming interfaces (APIs) (J1) can be, among others, JSON or XML. The language used on the server side is PHP.

The databases (J2) are connected to the servers (X) containing the programming interfaces (J1) and said servers (X) are connected to the servers (V) containing the front ends (K), the three servers (J2, X, V) being able to be connected to a storage system (Y) to save any type of information, the servers (V) containing the front ends (K) being able to have a load balancer (U) which, depending on the work load and availability of the systems, routes the web requests to the different elements of the architecture.

The method of transmitting information with the system described above comprises the steps of:
- Connecting (1) and (2) a super administrator (T) using a PC or equivalent to the central system, configuring a contact center, an administrator user (S) and other data relating to the contact center that will use the system. This process can be replaced with an automatic process in which an anonymous user requests being registered in the system of a contact center and administrator user.
- Connecting (3) and (4) an administrator by means of Internet to the central system (I) configuring agent users, supervisor users (R) of the system and the channels available and other configuration parameters. The channels are constructed based on the following parameters:
   ∘ Sensor of the smartphone used.
   ∘ Name of the channel which the client will see.
   ∘ Name of the channel which the agent will see.
   ∘ Direction of communication (client to agent or agent to client).
   ∘ Channel service (Q) used.
- Establishing a telephone connection or call between a smartphone (B) and a post of the contact center or vice versa which, in the case of establishing a connection between the smartphone and the post of the contact center, involves the following actions:
   ∘ the smartphone (B) making a call (5) to the public switched telephone network (PSTN)
   ∘ handing over the call (6) from the public switched telephone network (PSTN) (C) or the like to a call dispatcher or telephone switchboard (D)
   ∘ handing over the call (7) from the automatic call dispatcher or telephone switchboard (D) to the telephone (F) of an agent (E) of the call center.
- Requesting registration over the Internet (H) from the PC (G) of the agent post (E) to the smartphone (B) and comprising the steps of:
   ∘ Handing over the request (9) to the programming interface (J) by means of the front end (K) or another type of external front end.
   ∘ The programming interface (J) and the registration system (L) communicating (10) for the purpose of using the invention.
   ∘ The registration system performing the following actions:
      - Generating a secret key with the key generator.
      - Encoding and shortening the secret key by means of the security manager.
      - The key communicator transferring the information (11) to the client by means of different means of communication. A possible embodiment would be to use an SMS gateway sending an SMS to the client with an URL representing the short-form encoded private key.

The key communicator is not limited to sending an SMS, being able to use the techniques of:
▪ Sending an e-mail
▪ Transmitting DTMF tones
▪ Transmitting codes over the voice channel
▪ Transmitting a secret key using software previously installed in the smartphone.
   ∘ Handing over (12) the key to the smartphone (B) through the public telephone network.
   ∘ Accessing (13) the URL of the SMS received from the smartphone. The browser accessing the short URL by means of the Internet network opens automatically.
   ∘ The security manager (N) decoding (14) the secret key represented in the URL, storing the IP of the mobile telephone or other characteristics of the device and re-routing the browser of the smartphone to the central system.
      - The smartphone accessing (15) the central system to establish the registration and to start using the invention.
      - Using (16) one of the sensors of the smartphone
      - Transferring (17) (18) the values captured by any of the sensors of the smartphone (B) over the Internet (H) to the central system (I).
         The central system can optionally use (19) a service which offers support to channels for interpreting the captured information.
      - The central system asking (20) the dispatcher (P) for the destination of the captured interaction.
      - The dispatcher (P) in turn querying (21) the security manager (N) about the destination of the generated interaction and verifying that the IP or other parameters of the client are those previously registered, thereby preventing malicious attacks.
      - Showing (22) the information captured and synthesized by the channel in the agent PC (G) if the security manager approves it.

As previously stated, agent and user or client interaction is also possible, in which case the steps are:
- The agent (E) using (23) the PC (G) to ask (24) the central system (I) to send information
- The central system (I) constructing (25) information about the channel based on the support services offered to the channel
- The central system (I) asking (26) the dispatcher (P) for the destination of the information generated
- The dispatcher (P) querying (27) the security manager (N) about the destination of the information generated.
- Transmitting (28), (29) information about the channel to the smartphone (B) over the Internet (H)
- The smartphone (B) showing information (30) about the channel either on screen or by interpreting said information by means of one of the sensors and/or support systems provided for the channels.

As previously mentioned, the system allows transferring a call (31), (32), (33) and (34) from one agent to another agent by means of asking the central system (I), the latter asking the dispatcher (P) and the latter asking the security manager (N) to register a new agent so that it can continue the conversation, as well as see all the information and use the channels, if necessary.

Controlling the registration time of user (A) and the system is also possible by means of a request (35) sent to the central system (I), in which case the central system (I) receives (36) the request which is re-routed (37) to the dispatcher (P), the latter routes it (38) to the security manager.

Once extension of the registration time is approved, the user (A) sends the information (39), for example a photograph, over the Internet (H) (40), which information is sent (41) to the central system (I), and the latter sends (42) it to the dispatcher (P), and the latter in turn sends (43) it to the security manager (N) to inform (44) the agent (E) about the interactions pending action to be taken by the agent.

During the process, or once it has ended, the Supervisor (R) can connect (46) to the system by means of a PC or equivalent using the Internet network (H). The supervisor (R) also retrieves (47) all the information about what occurred in the interactions between the agent (E) and the client (A) from the databases, being able to show (48) the retrieved information in the form of tables or graphs in the PC of the supervisor (R).

Having sufficiently described the nature of the present invention as well as the way of putting it into practice, it is hereby stated that within its essential features, the invention may be carried out to practice in other embodiments differing in detail from that embodiments indicated by way of example, and such embodiments will also be covered under the protection that is sought provided that the fundamental principle of the invention is not altered, changed or modified.

## Claims

1. A system of transmitting information, comprising a call center made up of one or several agent posts provided with at least one telephone and a personal computer (PC), said posts being accessible from a call dispatcher which is connected to a switched telephone network, where said call dispatcher can be connected from a smartphone (B) with a connection to a telephone network and to a public data network, such as the Internet or a private network, and where agent posts (E) are connected to the data network, **characterized in that** it additionally comprises:
- A central system (I) or set of servers connected to the Internet, where there is hosted a web application which allows transmitting information between the smartphone (B) and the agent post or posts (E), where said central system in turn comprises:
- A set (J) of programming interfaces and databases
- One or several front ends or web user interfaces (K)
- A registration system (L) made up of different elements interconnected by means of private networks or the public Internet network, which allows the client and the agent to register to enable exchanging information over the different channels and which is interconnected to the central system by means of private or public networks.
- A dispatcher (P) re-routing interactions generated by the agent to the client that has been registered with the same secret key. It also re-routes the interactions generated by the client to the agent in a similar manner.
- A series of channel services (Q).

2. The system of transmitting information according to claim 1, **characterized in that** the web user interfaces can be: client (K1), agent (K2), supervisor (K3), administrator (K4) and super administrator (K5).

3. The system of transmitting information according to claim 2, **characterized in that** the web user interfaces have, in addition to their particular functions, transverse functions shared among different users:
▪ Reporting (k6): shows statistical information about occurring interactions in the form of tables or graphs.
▪ Channel constructor (k8): allows constructing channels based on sensors, direction of communication and literals.
▪ Configuration (k7): allows making changes in configuration and administration of the solution.

4. The system of transmitting information according to claim 1, **characterized in that** the registration system (L) comprises:
- A random key generator (M) generating a secret key enabling the exchange of information between agent and client once it is shared.
- A security manager (N) responsible for controlling access to and secure sending of interactions.
- A key communicator (O) responsible for transferring the encoded secret key to the agent and to the client.

5. The system of transmitting information according to claim 4, **characterized in that** the security manager performs the following functions:
- Encoding and/or shortening secret keys.
- Protecting communication in the event of a malicious attacker attempting to enter the communication over the course of the conversation. The key encoder stores the IP and other characteristics of the client device attempting to access information. If another device attempts to access after that, entrance thereof will be blocked. This functionality can be deactivated if the call center wants a client to be able to access the system after the course of the first conversation.
- Verifying that the mobile terminal of the client has the characteristics suitable for using the channel.

6. The system of transmitting information according to claim 4, **characterized in that** the forms of receiving the secret key consist of some of the following forms or combinations thereof:
• SMS.
• E-mail.
• Verbally
• DTMF tones
• Using software previously installed in the smartphone

7. The system of transmitting information according to claim 1, **characterized in that** the channel services (Q) resulting from combination with the sensors or functionalities of the smartphone configuring multiple channels of the system consist of some of the following:
- Maps (Q1): shows the map of a zone based on search coordinates or parameters.
- Payment gateway (Q2): allows making payments by means of credit card or other electronic payment methods.
- CRM (Q3): system for managing data pertaining to specific clients of a business.
- Health interpreter (Q4): interprets the transferred health data.
- Positioning service (Q5): system which allows determining geographical position based on the points of access to the mobile or Wifi network that are in a zone.
- Electronic certificate interpreter (Q6): checks the veracity of an electronic certificate.
- ERP (enterprise resource planning) (Q7): system for managing internal processes of a business.
- Biometric database (Q8)
- OCR (optical character recognition) (Q9): optically recognizes texts or characters based on images.
- QR (Quick Response) interpreter (Q10): identifies images or information encoded in QR.
- Barcode interpreter (Q11): identifies images or information encoded in barcodes.
- Public emergency service (Q12): systems where information about cases relating to public emergencies is registered
- Memory (Q13): allows storing computer data, such as files, for example.
- File reader (Q14): reads or interprets different types of files such as, for example, text documents, pdfs or spreadsheets.
- NFC interpreter (Q15): identifies information transferred by means of NFC technology.
- Other functionalities (Q16).

8. The system of transmitting information according to claim 1, **characterized in that** the smartphone or smartphones (B) used in the system can have one or some of the services listed below:
- Telephone (B1): serves to receive and make voice calls.
- Camera (B2): captures images or video.
- Microphone (B3): captures sound.
- Speaker (B4): emits sound, generally serves to emit voice, dialogues or music.
- Touch screen (B5): screen which interprets the strokes of the user's fingers.
- Operating system (B6): software managing the hardware resources and software applications installed in the smartphone.
- Web browser (B7): software which allows interacting with web pages.
- GPS (B8): sensor which determines the geographical position of the smartphone based on signals received by satellites.
- Memory (B9): component which allows storing computer data, such as files, for example.
- Vibrator (B10): component of the smartphone that makes the terminal vibrate for notifying the user of an event.
- Accelerometer (B11): component of the smartphone which allows identifying the vertical or horizontal position of the terminal.
- NFC (B12): component of the smartphone which allows wirelessly communicating with other devices by means of NFC technology.
- Fingerprint reader (B13): captures fingerprints
- Pulsimeter (B14): captures heart beats.

9. The system of transmitting information according to any of the preceding claims, **characterized in that** the system comprises:
- A supervisor (R) preferably connected to the central system by means of a PC and viewing occurring interactions or sessions in real time or in the log.
- An administrator (S) preferably connected to the central system by means of a PC and making configuration changes in objects relating to the account of the contact center.
- A super administrator (T) preferably using a PC to connect to the central system and making configuration changes affecting the entire platform of the invention and/or particular accounts.

10. The system of transmitting information according to claim 9, **characterized in that** the supervisor, administrator and super administrator are connected by means of a PC, or by means of a smartphone, tablet, PDA or the like.

11. A method of transmitting information according to the system claimed in any of the preceding claims, **characterized in that** it comprises the steps of:
- Establishing a telephone connection or call between a smartphone (B) and an agent post (E) of the contact center or vice versa,
- Requesting registration (8) over the Internet (H) from the PC (G) of the agent post (E) to the smartphone (B) and comprising the steps of:
∘ Handing over the request (9) to the programming interface (J) by means of the front end (K) or another type of external front end.
∘ The programming interface (J) and the registration system (L) communicating (10) for the purpose of allowing the exchange of information.
∘ The registration system performing the following actions:
• Generating a secret key with the key generator.
• Encoding and shortening the secret key by means of the security manager.
• The key communicator transferring the information (11) to the client by means of different registration means.
∘ Handing over (12) the key to the smartphone (B) through the public telephone network.
∘ Accessing (13) the URL of the received information from the smartphone
∘ The security manager (N) decoding (14) the secret key represented in the URL, storing the IP of the mobile telephone or other characteristics of the device and re-routing the browser of the smartphone to the central system.
- The smartphone accessing (15) the central system to establish the registration and to start using the invention.
- Using (16) one of the sensors of the smartphone
- Transferring (17) (18) the values captured by any of the sensors of the smartphone (B) over the Internet (H) to the central system (I).
- The central system asking (20) the dispatcher (P) for the destination of the captured interaction.
- The dispatcher (P) in turn querying (21) the security manager (N) about the destination of the generated interaction and verifying that the IP or other parameters of the client are those previously registered, thereby preventing malicious attacks.
- Showing (22) the information captured and synthesized by the channel in the agent PC (G) if the security manager approves it.

12. The method of transmitting information according to claim 11, **characterized in that** establishing a telephone connection between the smartphone and the post of the contact center involves the following actions:
∘ The smartphone (B) making a call (5) to the public switched telephone network (PSTN)
∘ Handing over the call (6) from the public switched telephone network (PSTN) (C) or the like to a call dispatcher or telephone switchboard (D)
∘ Handing over the call (7) from the automatic call dispatcher or telephone switchboard (D) to the telephone (F) of an agent (E) of the call center.

13. The method of transmitting information according to claim 11, **characterized in that** the transfer of information from the key communicator is performed by means of one or a combination of the following methods:
- An SMS gateway sending an SMS to the client with a URL representing the short-form encoded private key.
- Sending an e-mail
- Transmitting DTMF tones
- Transmitting codes over the voice channel
- Transmitting a secret key using software previously installed in the smartphone.

14. The method of transmitting information according to claim 11, **characterized in that** the central system can make use (19) of a service which offers support to channels for interpreting the captured information.

15. The method of transmitting information according to claim 11, **characterized in that** the system allows interaction between agent and user, comprising the steps of:
- The agent (E) using (23) the PC (G) to ask (24) the central system (I) to send information
- The central system (I) constructing (25) information about the channel based on the support services offered to the channel
- The central system (I) asking (26) the dispatcher (P) for the destination of the information generated
- The dispatcher (P) querying (27) the security manager (N) about the destination of the information generated.
- Transmitting (28), (29) information about the channel to the smartphone (B) over the Internet (H)
- The smartphone (B) showing information (30) about the channel either on screen or by interpreting said information by means of one of the sensors and/or support systems provided for the channels.

16. The method of transmitting information according to claim 11, **characterized in that** the system allows transferring a call from one agent to another by means of asking the central system (I), the latter asking the dispatcher (P) and the latter asking the security manager (N) to register a new agent so that said new agent can continue the conversation, as well as see all the information and use the channels, if necessary.

17. The method of transmitting information according to claim 11, **characterized in that** the system allows controlling the registration time of a user (A) and the system by means of a request (35) sent to the central system (I), in which case the central system (I) receives (36) the request which is re-routed (37) to the dispatcher (P), the latter routes it (38) to the security manager, such that once extension of the registration time is approved, the user (A) sends the information (39) over the Internet (H) (40), which information is sent (41) to the central system (I), and the latter sends (42) it to the dispatcher (P), and the latter in turn sends (43) it to the security manager (N) to inform (44) the agent (E) about the interactions pending action to be taken by the agent.

18. The method of transmitting information according to claim 11, **characterized in that** prior to the described steps it comprises the steps of:
- Connecting (1) and (2) a super administrator (T) using a PC or equivalent to the central system, configuring a contact center, an administrator user (S) and other data relating to the contact center that will use the system. This process can be replaced with an automatic process in which an anonymous user requests being registered in the system of a contact center and administrator user.
- Connecting (3) and (4) an administrator by means of Internet to the central system (I) configuring agent users, supervisor users (R) of the system and the channels available and other configuration parameters. The channels are constructed based on the following parameters:
∘ Sensor of the smartphone used.
∘ Name of the channel which the client will see.
∘ Name of the channel which the agent will see.
∘ Direction of communication (client to agent or agent to client).
∘ Channel service (Q) used

## Amended claims

### Amended claims under Art. 19.1 PCT

1. A system of transmitting information, comprising a call center made up of one or several agent posts provided with at least one telephone and a personal computer (PC), said posts being accessible from a call dispatcher which is connected to a switched telephone network, where said call dispatcher can be connected from a smartphone (B) with a connection to a telephone network and to a public data network, such as the Internet or a private network, and where agent posts (E) are connected to the data network, which comprises:
- A central system (I) or set of servers connected to the Internet, where there is hosted a web application which allows transmitting information between the smartphone (B) and the agent post or posts (E), where said central system in turn comprises:
- A set (J) of programming interfaces and databases
- One or several front ends or web user interfaces (K)
**Characterized in that**:
- A registration system (L) made up of different elements interconnected by means of private networks or the public Internet network, which allows the client and the agent to register to enable exchanging information over the different channels and which is interconnected to the central system by means of private or public networks, being in charge of generating a secret key, controlling access and transferring the encoded secret key to the agent
- A dispatcher (P) re-routing interactions generated by the agent to the client that has been registered with a same secret key. It also re-routes the interactions generated by the client to the agent in a similar manner.
- A series of channel services (Q) offered through channels wherein the channels are constructed based on the following parameters:
∘ Sensor of the smartphone used.
∘ Name of the channel, which the client will see.
∘ Name of the channel, which the agent will see.
∘ Direction of communication (client to agent or agent to client).
Being possible to send additional data over the established voice connection between an agent posts (E) and smartphone (B) without needing to interrupt the voice connection stablished

2. The system of transmitting information according to claim 1, **characterized in that** the web user interfaces can be: client (K1), agent (K2), supervisor (K3), administrator (K4) and super administrator (K5).

3. The system of transmitting information according to claim 2, **characterized in that** the web user interfaces have, in addition to their particular functions, transverse functions shared among different users:
▪ Reporting (k6): shows statistical information about occurring interactions in the form of tables or graphs.
▪ Channel constructor (k8): allows constructing channels based on sensors, direction of communication and literals.
▪ Configuration (k7): allows making changes in configuration and administration of the solution.

4. The system of transmitting information according to claim 1, **characterized in that** the registration system (L) comprises:
- A random key generator (M) generating a secret key enabling the exchange of information between agent and client once it is shared.
- A security manager (N) responsible for controlling access to and secure sending of interactions.
- A key communicator (O) responsible for transferring the encoded secret key to the agent and to the client.

5. The system of transmitting information according to claim 4, **characterized in that** the security manager performs the following functions:
- Encoding and/or shortening secret keys.
- Protecting communication in the event of a malicious attacker attempting to enter the communication over the course of the conversation. The key encoder stores the IP and other characteristics of the client device attempting to access information. If another device attempts to access after that, entrance thereof will be blocked. This functionality can be deactivated if the call center wants a client to be able to access the system after the course of the first conversation.
- Verifying that the mobile terminal of the client has the characteristics suitable for using the channel.

6. The system of transmitting information according to claim 4, **characterized in that** the forms of receiving the secret key consist of some of the following forms or combinations thereof:
• SMS.
• E-mail.
• Verbally
• DTMF tones
• Using software previously installed in the smartphone

7. The system of transmitting information according to claim 1, **characterized in that** the channel services (Q) resulting from combination with the sensors or functionalities of the smartphone configuring multiple channel of the system consist of some of the following:
- Maps (Q1): shows the map of a zone based on search coordinates or parameters.
- Payment gateway (Q2): allows making payments by means of credit card or other electronic payment methods.
- CRM (Q3): system for managing data pertaining to specific clients of a business.
- Health interpreter (Q4): interprets the transferred health data.
- Positioning service (Q5): system which allows determining geographical position based on the points of access to the mobile or Wifi network that are in a zone.
- Electronic certificate interpreter (Q6): checks the veracity of an electronic certificate.
- ERP (enterprise resource planning) (Q7): system for managing internal processes of a business.
- Biometric database (Q8)
- OCR (optical character recognition) (Q9): optically recognizes texts or characters based on images.
- QR (Quick Response) interpreter (Q10): identifies images or information encoded in QR.
- Barcode interpreter (Q11): identifies images or information encoded in barcodes.
- Public emergency service (Q12): systems where information about cases relating to public emergencies is registered
- Memory (Q13): allows storing computer data, such as files, for example.
- File reader (Q14): reads or interprets different types of files such as, for example, text documents, pdfs or spreadsheets.
- NFC interpreter (Q15): identifies information transferred by means of NFC technology.
- Other functionalities (Q16).

8. The system of transmitting information according to claim 1, **characterized in that** the smartphone or smartphones (B) used in the system can have one or some of the services listed below:
- Telephone (B1): serves to receive and make voice calls.
- Camera (B2): captures images or video.
- Microphone (B3): captures sound.
- Speaker (B4): emits sound, generally serves to emit voice, dialogues or music.
- Touch screen (B5): screen which interprets the strokes of the user's fingers.
- Operating system (B6): software managing the hardware resources and software applications installed in the smartphone.
- Web browser (B7): software which allows interacting with web pages.
- GPS (B8): sensor which determines the geographical position of the smartphone based on signals received by satellites.
- Memory (B9): component which allows storing computer data, such as files, for example.
- Vibrator (B10): component of the smartphone that makes the terminal vibrate for notifying the user of an event.
- Accelerometer (B11): component of the smartphone which allows identifying the vertical or horizontal position of the terminal.
- NFC (B12): component of the smartphone which allows wirelessly communicating with other devices by means of NFC technology.
- Fingerprint reader (B13): captures fingerprints
- Pulsimeter (B14): captures heart beats.

9. The system of transmitting information according to any of the preceding claims, **characterized in that** the system comprises:
- A supervisor (R) preferably connected to the central system by means of a PC and viewing occurring interactions or sessions in real time or in the log.
- An administrator (S) preferably connected to the central system by means of a PC and making configuration changes in objects relating to the account of the contact center.
- A super administrator (T) preferably using a PC to connect to the central system and making configuration changes affecting the entire platform of the invention and/or particular accounts.

10. The system of transmitting information according to claim 9, **characterized in that** the supervisor, administrator and super administrator are connected by means of a PC, or by means of a smartphone, tablet, PDA or the like.

11. A method of transmitting information according to the system claimed in any of the preceding claims, **characterized in that** it comprises the steps of:
- Establishing a telephone connection or call between a smartphone (B) and an agent post (E) of the contact center or vice versa,
- Requesting registration (8) over the Internet (H) from the PC (G) of the agent post (E) to the smartphone (B) and comprising the steps of:
∘ Handing over the request (9) to the programming interface (J) by means of the front end (K) or another type of external front end.
∘ The programming interface (J) and the registration system (L) communicating (10) for the purpose of allowing the exchange of information.
∘ The registration system performing the following actions:
• Generating a secret key with the key generator.
• Encoding and shortening the secret key by means of the security manager.
• The key communicator transferring the information (11) to the client by means of different registration means.
∘ Handing over (12) the key to the smartphone (B) through the public telephone network.
∘ Accessing (13) the URL of the SMS from the smartphone
∘ The security manager (N) decoding (14) the secret key represented in the URL, storing the IP of the mobile telephone or other characteristics of the device and re-routing the browser of the smartphone to the central system.
- accessing (15) by the smartphonte to the central system to establish the registration and to start using the invention.
- Using (16) one of the sensors of the smartphone
- Transferring (17) (18) the values captured by any of the sensors of the smartphone (B) over the Internet (H) to the central system (I).
- The central system asking (20) the dispatcher (P) for the destination of the captured interaction re-routing interactions generated by the agent to the client and the interactions generated by the client to the agent
- The dispatcher (P) in turn querying (21) the security manager (N) about the destination of the generated interaction and verifying that the IP or other parameters of the client are those previously registered, thereby preventing malicious attacks.
- Showing (22) the information captured and synthesized by the channel in the agent PC (G) if the security manager approves it.
Allowing sending additional data, such as positions or photographs, over one and the same already established voice connection without needing to interrupt the connection

12. The method of transmitting information according to claim 11, **characterized in that** establishing a telephone connection between the smartphone and the post of the contact center involves the following actions:
∘ The smartphone (B) making a call (5) to the public switched telephone network (PSTN)
∘ Handing over the call (6) from the public switched telephone network (PSTN) (C) or the like to a call dispatcher or telephone switchboard (D)
∘ Handing over the call (7) from the automatic call dispatcher or telephone switchboard (D) to the telephone (F) of an agent (E) of the call center.

13. The method of transmitting information according to claim 11, **characterized in that** the transfer of information from the key communicator is performed by means of one or a combination of the following methods:
- An SMS gateway sending an SMS to the client with a URL representing the short-form encoded private key.
- Sending an e-mail
- Transmitting DTMF tones
- Transmitting codes over the voice channel
- Transmitting a secret key using software previously installed in the smartphone.

14. The method of transmitting information according to claim 11, **characterized in that** the central system can make use (19) of a channel service which offers support to channels for interpreting the captured information.

15. The method of transmitting information according to claim 11, **characterized in that** the system allows interaction between agent and user, comprising the steps of:
- The agent (E) using (23) the PC (G) to ask (24) the central system (I) to send information
- The central system (I) constructing (25) information about the channel based on the support services offered by the channel services
- The central system (I) asking (26) the dispatcher (P) for the destination of the information generated
- The dispatcher (P) querying (27) the security manager (N) about the destination of the information generated.
- Transmitting (28), (29) information about the channel to the smartphone (B) over the Internet (H)
- The smartphone (B) showing information (30) about the channel either on screen or by interpreting said information by means of one of the sensors and/or support systems provided by the channel services.

16. The method of transmitting information according to claim 11, **characterized in that** the system allows transferring a call from one agent to another by means of asking the central system (I), the latter asking the dispatcher (P) and the latter asking the security manager (N) to register a new agent so that said new agent can continue the conversation, as well as see all the information and use the channel, if necessary.

17. The method of transmitting information according to claim 11, **characterized in that** the system allows controlling the registration time of a user (A) and the system by means of a request (35) sent to the central system (I), in which case the central system (I) receives (36) the request which is re-routed (37) to the dispatcher (P), the latter routes it (38) to the security manager, such that once extension of the registration time is approved, the user (A) sends the information (39) over the Internet (H) (40), which information is sent (41) to the central system (I), and the latter sends (42) it to the dispatcher (P), and the latter in turn sends (43) it to the security manager (N) to inform (44) the agent (E) about the interactions pending action to be taken by the agent.

18. The method of transmitting information according to claim 11, **characterized in that** prior to the described steps it comprises the steps of:
- Connecting (1) and (2) a super administrator (T) using a PC or equivalent to the central system, configuring a contact center, an administrator user (S) and other data relating to the contact center that will use the system. This process can be replaced with an automatic process in which an anonymous user requests being registered in the system of a contact center and administrator user.
- Connecting (3) and (4) an administrator by means of Internet to the central system (I) configuring agent users, supervisor users (R) of the system and the channel available and other configuration parameters. The channels are constructed based on the following parameters:
∘ Sensor of the smartphone used.
∘ Name of the channel which the client will see.
∘ Name of the channel which the agent will see.
∘ Direction of communication (client to agent or agent to client).
∘ Channel service (Q) used
